# EUROPEAN PATENT APPLICATION

(11) **EP 1 950 725 A1**
(43) Date of publication of application: **30.07.2008**
(21) Application number: 06832674.3
(22) Date of filing: 15.11.2006
(51) Int. Cl.: G09F 9/00, G09F 13/12, G09F 13/22

(54) **DISPLAY DEVICE**

(30) Priority: 17.11.2005 JP 2005332836; 28.02.2006 JP 2006052946
(71) Applicant: KABUSHIKI KAISHA TOYOTA JIDOSHOKKI, Kariya-shi, Aichi 448-8671 (JP)
(72) Inventor: SUZUKI, Tsuneo, Aichi 448-8671 (JP); BESSHI, Noriyuki, Aichi 448-8671 (JP); MITA, Yasuya, Aichi 448-8671 (JP); MURAMATSU, Miki, Aichi 471-8571 (JP)
(74) Representative: TBK-Patent
(86) International application number: PCT/JP2006/322743
(87) International publication number: WO 2007/058202

(57) **Abstract**

When an organic EL device 9 is turned ON, an image of a design 2b of a design film 2 formed by light L2 emitted when light L1 generated in an organic layer 7 is transmitted through the design film 2 and a transparent member 3 and then enters a half mirror layer 4 and an image of the design 2b of the design film 2 formed by light L5 emitted when the above-mentioned light is reflected by the half mirror layer 4 and then reflected by a reflection electrode layer 8 of the organic EL device 9 are shifted to each other in a horizontal direction without a loss. As a result, the design 2b drawn on the design film 2 comes up and is seen in three dimensions. When the organic EL device 9 is turned OFF, the light emission from a surface light-emission apparatus 1 stops so that the apparatus serves as a simple mirror by virtue of the half mirror layer 4.

## Description

### Technical Field

The present invention relates to a display device, and more particularly, to a display device for displaying in three dimensions an obj ect to be displayed such as a character and a graphic, or alternatively for performing display with a feeling of depth.

### Background Art

Patent Document 1 discloses a display device for displaying in three dimensions a mark composed of a character, a graphic, or the like by using a surface light source of white. A mark is drawn with a transparent colored light transmitting layer on the front surface of a transparent flat plate member, while a mask in which the shape of the mark is punched is provided on the rear surface. Then, white light is projected from the rear side of the mask by an electroluminescence apparatus (hereinafter, referred to as "EL apparatus") serving as a surface light source. Because an image formed by the light having passed through the punching portion of the mask and an image formed by the light having been transmitted through the colored light transmitting layer are shifted to each other, the mark is seen in a state of coming up in three dimensions.

[Patent Document 1] Japanese Utility Model Application Laid-open No. Hei 04-114083

### Disclosure of the Invention

### Problems to be solved by the Invention

Nevertheless, in the display device of Patent Document 1, because a mark is drawn with a colored light transmitting layer on the front surface of a transparent flat plate member, the mark is always seen regardless of the emission/non-emission of light from the EL apparatus. This has caused a problem that the appearance especially at the time of non-emission of light is not satisfactory.
Further, a complicated configuration is employed that a colored light transmitting layer for drawing a mark and a mask in which the shape of the mark is punched are arranged on the two faces of a flat plate member. Furthermore, the positions of the colored light transmitting layer and the mask need be aligned to each other. This has caused a problem of a large amount of labor hour in manufacturing.

The present invention has been made in order to solve these problems in the related art. An obj ect of the present invention is to provide a display device which displays in three dimensions a design serving as an object to be displayed at the time of light emission and still has satisfactory appearance even at the time of non-emission of light, and has a simple configuration and hence can easily be manufactured.

### Means for solving the Problems

A display device according to the present invention includes an image forming apparatus which has a reflecting layer on a rear surface side thereof and emits light to a front surface side thereof to form an image of a design to be displayed, in which a transparent member is arranged on the front surface side of the image forming apparatus and, further, a half mirror layer is arranged on a front surface side of the transparent member.
Here, in the specification of the present invention, a "image of a design" includes a character, a graphic, a symbol, an image, a pattern, and a combination of two or more of these.

An image forming apparatus can be constructed from: a mirror type surface light-emission apparatus which has a reflecting layer on the rear surface side and emits light from the front surface; and a design construction layer which is arranged on the front surface side of this surface light-emission apparatus and in which a design to be displayed. Here, the surface light-emission apparatus may be constructed from an EL apparatus including: a reflection electrode layer which forms a reflecting layer; a transparent electrode layer; and a light emitting layer which is interposed between these reflection electrode layer and transparent electrode layer. Here, in the specification of the present invention, the surface light-emission apparatus may have a planar shape or a curved surface shape. Alternatively, a planar shape and a curved surface shape may be combined in accordance with the shape of a design.
Further, the design construction layer may be formed from: a reflection film which is patterned in correspondence with the shape of a design to be displayed and has a light blocking property; or a light transmitting film patterned in correspondence with the shape of a design to be displayed. Specifically, a mirror-like masking sheet may be arranged on the front surface of the surface light-emission apparatus or on the rear surface of the transparent member, or alternatively a thin film may be formed by at least one method selected from vapor deposition, plating, plating-appearance hot stamping, and printing, so a design construction layer may be obtained. Here, when the design construction layer is formed from a light-blocking reflection film, a monochromatic design can be expressed clearly. This approach is effective especially when characters are desired to be expressed clearly. Further, when the design construction layer is formed from a light transmitting film (multicolor printing, a multicolor film, or a combination of monochrome films of different colors may be employed), a multicolor design can be expressed.

Further, an image forming apparatus can be constructed from a mirror type display which has a reflecting layer on the rear surface side and which emits light in a pattern corresponding to a design to be displayed. Here, the display may be constructed from an EL apparatus having: a reflection electrode layer which forms a reflecting layer; a transparent electrode layer; and a light emitting layer which is interposed between these reflection electrode layer and transparent electrode layer.
In this case, the EL apparatus is preferable to be of any one of the following methods:
(1) at least one of the transparent electrode layer or the light emitting layer is patterned in correspondence with the shape of a design to be displayed;
(2) an insulating layer which is interposed between the reflection electrode layer and the transparent electrode layer and which is patterned in correspondence with the shape of a design to be displayed is provided;
(3) segment display of a design to be displayed is performed; and
(4) dot matrix display of a design to be displayed is performed.
Here, the emission color of the EL apparatus may be monochrome or multicolor. When light is emitted in a plurality of colors, the emission colors may be fixed, or alternatively the emission colors may vary.

The display device according to the present invention is preferable to be installed in the cabin of a vehicle. In particular, this apparatus may be installed in a scuff plate or an inside door handle of a vehicle.

### [Effect of the Invention]

According to the present invention, a design to be displayed can be displayed in multiple without a loss of the design. Thus, a display device which can display a design in three dimensions at the time of light emission and still has satisfactory appearance at the time of non-emission of light can be realized in a simple configuration. Further, this display device can be manufactured easily.

### [Brief Description of the Drawings]

[FIG. 1] FIG. 1 is a perspective view showing a state of a display device of an audio cover at the time of light emission according to Embodiment 1.
[FIG. 2] FIG. 2 is a sectional view taken along line A-A of FIG. 1.
[FIG. 2a] FIG. 2a is a sectional view showing a structure of a display device according to a modification of Embodiment 1.
[FIG. 3] FIG. 3 is a sectional view showing a structure of a display device according to Embodiment 2.
[FIG. 4] FIG. 4 is a sectional view showing a structure of a display device according to Embodiment 3.
[FIG. 4a] FIG. 4a is a sectional view showing a structure of a display device according to a modification of Embodiment 3.
[FIG. 5] FIG. 5 is a sectional view showing a structure of a display device according to Embodiment 4.
[FIG. 6] FIG. 6 is a sectional view showing a structure of a display device according to Embodiment 5.
[FIG. 7] FIG. 7 is a sectional view showing a structure of a display device according to Embodiment 6.
[FIG. 8] FIG. 8 is a sectional view showing a structure of a display device according to Embodiment 7.
[FIG. 8a] FIG. 8a is a sectional view showing a structure of a display device according to a modification of Embodiment 7.
[FIG. 9] FIG. 9 is a perspective part view showing a cabin of a vehicle in which a display device of the present invention is applied to a scuff plate and an inside door handle.
[FIG. 10] FIG. 10 is a perspective view showing a clock to which a display device of the present invention is applied.

### Best Mode of carrying out the Invention

Embodiments of the present invention are described below with reference to the accompanying drawings.

### Embodiment 1

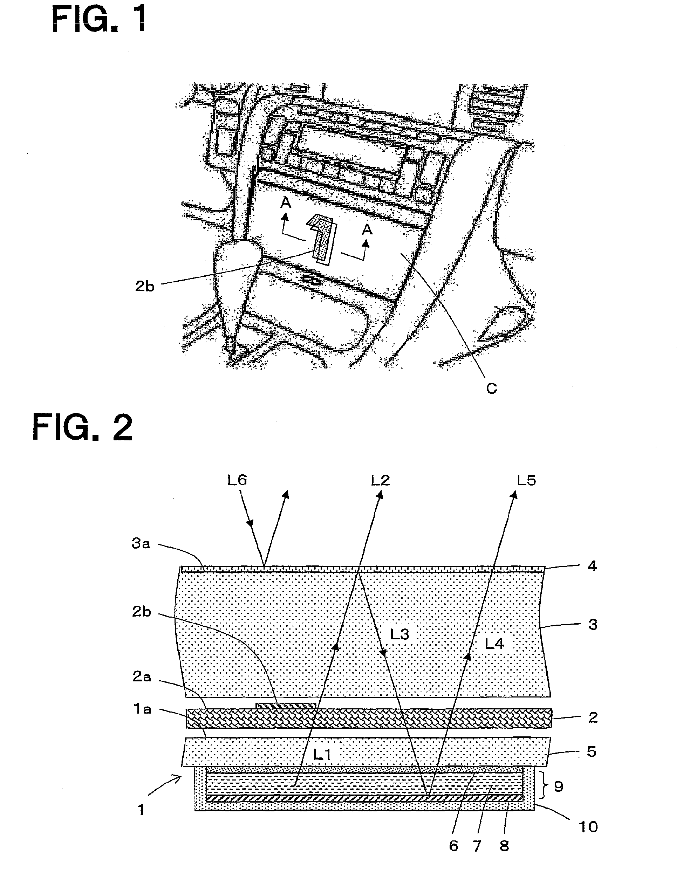

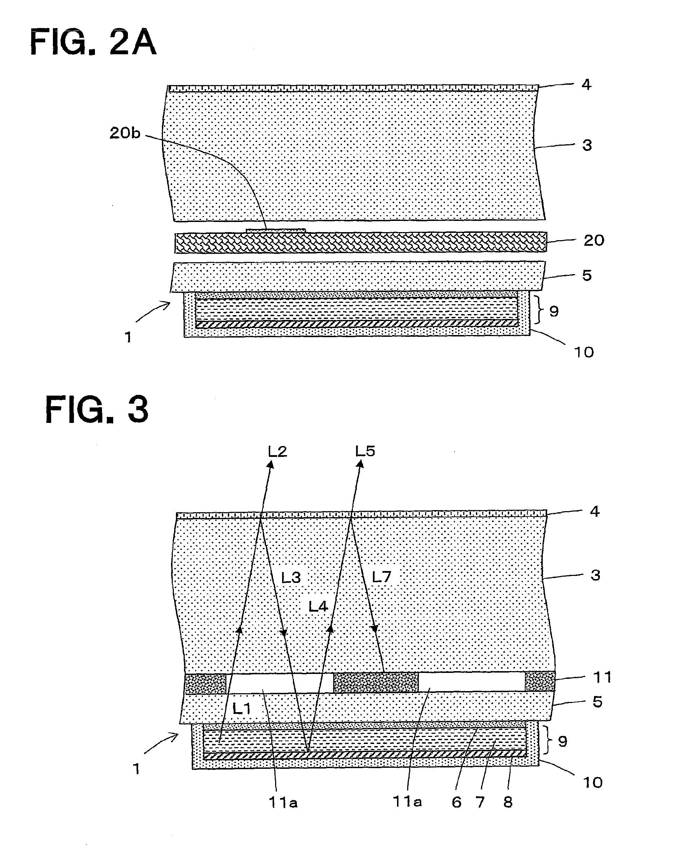

FIG. 1 is a perspective view showing the state of a display device provided in a transparent audio cover C at the time of light emission according to Embodiment 1. FIG. 2 is a sectional view taken along line A-A in FIG. 1. A design film 2 serving as a design construction layer is arranged opposite to a front surface 1a serving as an emission surface of a mirror type surface light-emission apparatus 1 composed of an organic electroluminescence apparatus (hereinafter, referred to as "organic EL apparatus"). Further, a flat-plate shaped transparent member 3 is arranged on a front surface 2a side of the design film 2, while a half mirror layer 4 is formed on a front surface 3a of the transparent member 3.

The surface light-emission apparatus 1 has an organic electroluminescence device 9 (hereinafter, referred to as "organic EL device 9") formed by stacking a transparent electrode layer 6, an organic layer 7 containing a light emitting layer, and a reflection electrode layer 8 on a surface of a transparent substrate 5. Then, a protection layer 10 is formed so as to cover the entire organic EL device 9. The rear surface of the transparent substrate 5 serves as the front surface 1a of the surface light-emission apparatus 1 and hence opposes the design film 2.
Here, it is sufficient that the transparent substrate 5 is formed fromamaterial having transmissivity to visible light. Thus, glass, resin, or the like may be employed. It is sufficient that the transparent electrode layer 6 has a function as an electrode and has transmissivity at least to visible light. Thus, for example, ITO is adopted as its material.

The organic layer 7 may be a single layer composed only of a light emitting layer, or alternatively may be a multilayer obtained when any one or more of a hole injection layer, a hole transporting layer, a hole injection transporting layer, a hole blocking layer, an electron injection layer, an electron transporting layer, and an electron blocking layer are stacked with a light emitting layer. Materials for the light emitting layer include publicly known organic light-emitting materials such as Alq₃ and DCM. Further, the hole injection layer, the hole transporting layer, the hole injection transporting layer, the hole blocking layer, the electron injection layer, the electron transporting layer, the electron blocking layer, and the like may appropriately be formed from publicly known materials.
It is sufficient that the reflection electrode layer 8 has a function as an electrode and has reflectivity at least to visible light. For example, Al, Cr, Mo, an Al alloy, an Al/Mo stack, and the like can be employed.
The protection layer 10 may be silicon nitride, silicon oxynitride, silicon oxide, or the like formed, for example, by plasma CVD.

In the design film 2, a predetermined design 2b composed of a character, a graphic, or the like to be displayed on this display device is printed, for example, on a surface of a transparent resin film. Here, the design 2b has a light blocking property.
The transparent member 3 is composed, for example, of a transparent acrylics plate. On the front surface 3a of the transparent member 3, Al, Cr, Mo, or the like is arranged by vapor deposition or sputtering so that a half mirror layer 4 is formed. The transparent member 3 may be composed of a glass plate.

Next, the operation of the display device according to Embodiment 1 of the present invention is described below. This display device displays through the half mirror layer 4 the design 2b drawn on the design film 2, and is installed in the cabin of a vehicle such as an automobile, for example, in a state where the half mirror layer 4 is directed to the inner side of the cabin.
When a current is supplied between the transparent electrode layer 6 and the reflection electrode layer 8 of the surface light-emission apparatus 1 so that the organic EL device 9 is turned ON, light L1 generated in the organic layer 7 enters directly the transparent electrode layer 6, or alternatively, after being reflected in the reflection electrode layer 8, enters the transparent electrode layer 6, then is transmitted through the transparent substrate 5, and then emitted from the front surface 1a of the surface light-emission apparatus 1. After being transmitted through the design film 2, the light L1 enters the transparent member 3, then is transmitted through the transparent member 3, and then enters the half mirror layer 4 formed on the front surface 3a of the transparent member 3.

Here, the light L1 branches into: light L2 that is transmitted through the half mirror layer 4 and then emitted; and light L3 that is reflected in the half mirror layer 4 and then transmitted through the transparent member 3 again. The light L2 having been transmitted through the half mirror layer 4 reaches, for example, the eyes of a passenger of the vehicle. As a result, an image of the design 2b drawn on the design film 2 is recognized by the passenger. On the other hand, the light L3 reflected in the half mirror layer 4 is, after being transmitted through the transparent member 3 again, transmitted sequentially through the design film 2 and the transparent electrode layer 6 and the organic layer 7 of the surface light-emission apparatus 1, and then reflected in the reflection electrode layer 8. Light L4 reflected as such in the reflection electrode layer 8 is transmitted sequentially through the organic layer 7, the transparent electrode layer 6, and the transparent substrate 5, and then emitted from the front surface 1a of the surface light-emission apparatus 1. The light L4 is then transmitted through the design film 2 and the transparent member 3, and then enters the half mirror layer 4 again.

A part of the light L4 is reflected in the half mirror layer 4 so as to return to the transparent member 3. The remaining part is transmitted through the half mirror layer 4 and then emitted as light L5. The light L5 has a position shifted from that of the light L2 described above, but reaches the eyes of the passenger of the vehicle similarly to the light L2. As a result, an image of the design 2b drawn on the design film 2 is recognized by the passenger.
At that time, the image formed by the light L5 is shifted in a horizontal direction, i.e., in a plane direction of the half mirror layer 4, relative to the image formed by the light L2. Thus, the passenger of the vehicle recognizes as if the design 2b drawn on the design film 2 comes up. In particular, when the angle at which the passenger of the vehicle sees the half mirror layer 4 is shallower, that is, inclined more from the normal direction to the surface of the half mirror layer 4, the amount of shift between these two images becomes larger. Thus, the design 2b drawn on the design film 2 is seen in three dimensions. Further, even in a case where the angle at which the passenger of the vehicle sees the half mirror layer 4 is the same, when the transparent member 3 has a greater thickness, the amount of shift between the two images increases so that the design 2b is seen in a state of coming up further.

In this way, when the organic EL device 9 of the surface light-emission apparatus 1 is turned ON, the design 2b drawn on the design film 2 is displayed in three dimensions. In contrast, when the organic EL device 9 is turned OFF, the light emission from the surface light-emission apparatus 1 stops so that the light illuminating the design film 2 disappears. Thus, even when light L6 on the side of the cabin of a vehicle enters the surface of the half mirror layer 4 so that a part of the light is transmitted through the half mirror layer 4, the intensity of light reflected in the surface of the half mirror layer 4 is stronger. Accordingly, the passenger in the vehicle cannot see the design 2b drawn on the design film 2. That is, when the organic EL device 9 is OFF, the display device serves as a simple mirror by virtue of the half mirror layer 4.

As described above, the display device according to Embodiment 1 serves as a mirror and hence has satisfactory appearance at the time of non-emission of light of the surface light-emission apparatus 1. Further, the design 2b drawn on the design film 2 comes up only at the time of light emission, thereby making it possible to surprise a person who sees the display.
Further, a simple configuration is employed such that the design film 2 is arranged between the surface light-emission apparatus 1 composed of an organic EL apparatus and the transparent member 3 in which the half mirror layer 4 is formed. This reduces the number of components, hence simplifies the manufacturing, and hence permits manufacturing at low cost.

Here, the configuration of the design construction layer is not limited to a configuration in which a design that is to be displayed on the display device and has a light blocking property is formed on a light transmitting substrate such as a transparent film.
For example, as shown in FIG. 2a, when a white light type EL apparatus is employed as the organic EL apparatus of the surface light-emission apparatus 1 while a design film 20 in which a design 20b is drawn in color ink having light transmissivity is employed, the design can directly be displayed in color. Here, an EL apparatus of monochrome type or the like which has a particular emission color may also be employed.

### Embodiment 2

FIG. 3 shows a sectional view of a structure of a display device according to Embodiment 2. In this display device, in place of the design film 2 in the display device of Embodiment 1 shown in FIG. 2, a so-called punching metal 11 is employed as a design construction layer. In the punching metal 11, a design is expressed by forming an opening 11a in a flat metal plate having a light blocking property. The reflection factor of the surface of the flat metal plate is assumed to be substantially lower than the reflection factor of the reflection electrode layer 8 of the organic EL device 9.

Light L1 generated in the organic layer 7 of the organic EL device 9 is transmitted through the transparent substrate 5, then passed through the opening 11a of the punching metal 11, then transmitted through the transparent member 3, and then enters the half mirror layer 4. A part of the light L1 is transmitted through the half mirror layer 4 and then emitted as light L2 to reach, for example, the eyes of a passenger of a vehicle. As a result, an image of the design drawn by the opening 11a of the punching metal 11 is recognized by the passenger. On the other hand, light L3 reflected in the half mirror layer 4 is, after being transmitted through the transparent member 3 again, passed through the opening 11a of the punching metal 11, then transmitted sequentially through the transparent substrate 5, the transparent electrode layer 6, and the organic layer 7, and then reflected in the reflection electrode layer 8. Light L4 reflected as such in the reflection electrode layer 8 is transmitted sequentially through the organic layer 7, the transparent electrode layer 6, and the transparent substrate 5, then passed through the opening 11a of the punching metal 11, then transmitted through the transparent member 3, and then enters the half mirror layer 4 again.

A part of the light L4 is transmitted through the half mirror layer 4 and then emitted as light L5 to reach the eyes of the passenger of the vehicle similarly to the light L2. As a result, an image of the design drawn by the opening 11a of the punching metal 11 is recognized by the passenger. On the other hand, light L7 reflected in the half mirror layer 4 is transmitted through the transparent member 3 again. However, when the light enters the flat metal plate part which is not the opening 11a of the punching metal 11, because the reflection factor of the surface of the flat metal plate is low, almost no light is reflected and emitted from the half mirror layer 4 to the passenger of the vehicle.

In this way, a shadow of the design formed by the opening 11a of the punching metal 11 is projected in a horizontally shifted manner within a range of the inside of the design where the opening 11a is formed. Thus, the design formed by the opening 11a of the punching metal 11 is seen by the passenger of the vehicle as if the design has a depth in three dimensions (in other words, a state where the shape of the design formed by the opening 11a of the punching metal 11 is depressed into an even depth is seen from obliquely above.

### Embodiment 3

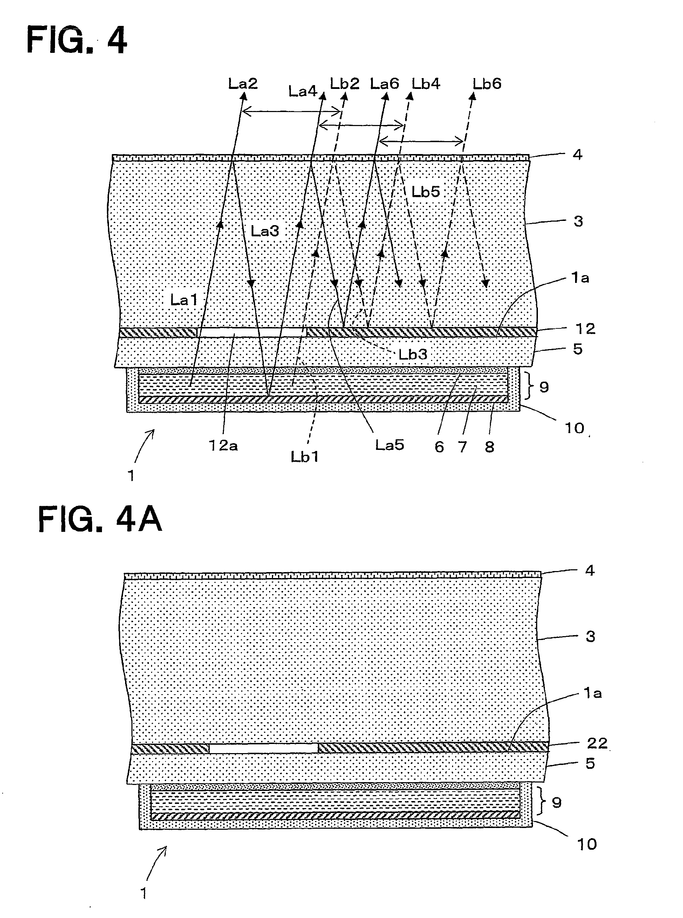

FIG. 4 shows a sectional view of a structure of a display device according to Embodiment 3. In this display device, in place of the design film 2 in the display device of Embodiment 1 shown in FIG. 2, a reflection film 12 which has a light blocking property and is patterned in correspondence with the shape of a design to be displayed is employed. The reflection film 12 can be formed by vapor deposition of a metallic material such as Al, Cr, and Mo on the front surface 1a of the surface light-emission apparatus 1, that is, on the rear surface of the transparent substrate 5.

Light La1 generated in the organic layer 7 of the organic EL device 9 is transmitted through the transparent substrate 5, then passed through an edge of a patterned opening 12a of a reflection film 12, then transmitted through the transparent member 3, and then enters the half mirror layer 4. A part of the light La1 is transmitted through the half mirror layer 4 and then emitted as light La2. Light La3 reflected in the half mirror layer 4 is, after being transmitted through the transparent member 3 again, passed through the opening 12a of the reflection film 12, then transmitted sequentially through the transparent substrate 5, the transparent electrode layer 6, and the organic layer 7, and then reflected in the reflection electrode layer 8. Light La3 reflected as such in the reflection electrode layer 8 is transmitted sequentially through the organic layer 7, the transparent electrode layer 6, and the transparent substrate 5, then passed through the opening 12a of the reflection film 12, then transmitted through the transparent member 3, and then enters the half mirror layer 4 again. A part of the light La3 is transmitted through the half mirror layer 4 and then emitted as light La4 . Light La5 reflected in the half mirror layer 4 is transmitted through the transparent member 3 again. However, when the light enters the reflection film 12 of a portion where the opening 12a is not present, the light is reflected in the surface of the reflection film 12, then transmitted through the transparent member 3, and then enters the half mirror layer 4. A part of the light La5 is transmitted through the half mirror layer 4 and then emitted as light La6. The light reflected in the half mirror layer 4 is, after being transmitted through the transparent member 3 again, reflected in the surface of the reflection film 12.

Similarly, among the light generated in the organic layer 7, the light Lb1 having entered the transparent member 3 through another edge of the opening 12a of the reflection film 12 enters the half mirror layer 4. A part of the light Lb1 is transmitted through the half mirror layer 4 and then emitted as light Lb2 . Light Lb3 reflected in the half mirror layer 4 is, after being transmitted through the transparent member 3, reflected in the surface of the reflection film 12 and then enters the half mirror layer 4 again. A part of the light Lb3 is transmitted through the half mirror layer 4 and then emitted as light Lb4. Further, light Lb5 reflected in the half mirror layer 4 is reflected in the surface of the reflection film 12 and then enters the half mirror layer 4 again. A part of the light Lb5 is transmitted through the half mirror layer 4 and then emitted as light Lb6.

In this way, the light emitted from the half mirror layer 4 reaches the eyes of a passenger of the vehicle. Thus, an image of the design patterned in the reflection film 12 is recognized by the passenger. At that time, the light La1 having passed through an edge of the opening 12a of the reflection film 12 and the light Lb1 having passed through another edge are both repeatedly reflected between the half mirror layer 4 and the surface of the reflection film 12 (or the reflection electrode layer 8). Then, at each time, a part of the light is transmitted through the half mirror layer 4 and emitted from a position shifted in a plane direction of the half mirror layer 4. Thus, the design is seen by the passenger of the vehicle in a state of coming up in multiple in three dimensions without a loss of the design. Further, when the passenger of the vehicle moves to a position more distant from the front position with respect to the display surface of the surface light-emission apparatus (the vertical position relative to the opening 12a of the reflection film 12 in FIG. 4), the design is seen in a state where the intervals of the designs to be displayed increase and that the design comes up in multiple without a loss.

Here, the reflection film 12 has a light blocking property. Thus, the light generated in the organic layer 7 is suppressed to be transmitted through the reflection film 12 of a portion other than the opening 12a and enter the transparent member 3. Thus, the design can be seen clearly.
Further, when the reflection film 12 has a reflection factor equivalent to or greater than the reflection factor of the reflection electrode layer 8 of the organic EL device 9, the design seen in multiple will becomes clearer.

In Embodiment 3 described above, the reflection film 12 was formed by vapor deposition of a metallic material on the front surface 1a of the surface light-emission apparatus 1. However, the reflection film 12 may be formed by vapor deposition on the rear surface of the transparent member 3 opposing the surface light-emission apparatus 1.
Further, in place of the vapor deposition film, a thin film made by at least one method selected fromplating, plating-appearance hot stamping, and printing may be formed on the front surface 1a of the surface light-emission apparatus 1 or on the rear surface of the transparent member 3, so this film may be employed as the reflection film 12.
Further, as shown in FIG. 4a, a general-purpose masking sheet 22 of mirror type having a light blocking property and reflexibility may be patterned and then bonded to the front surface 1a of the surface light-emission apparatus 1 or to the rear surface of the transparent member 3, so this film may be employed as the reflection film.

### Embodiment 4

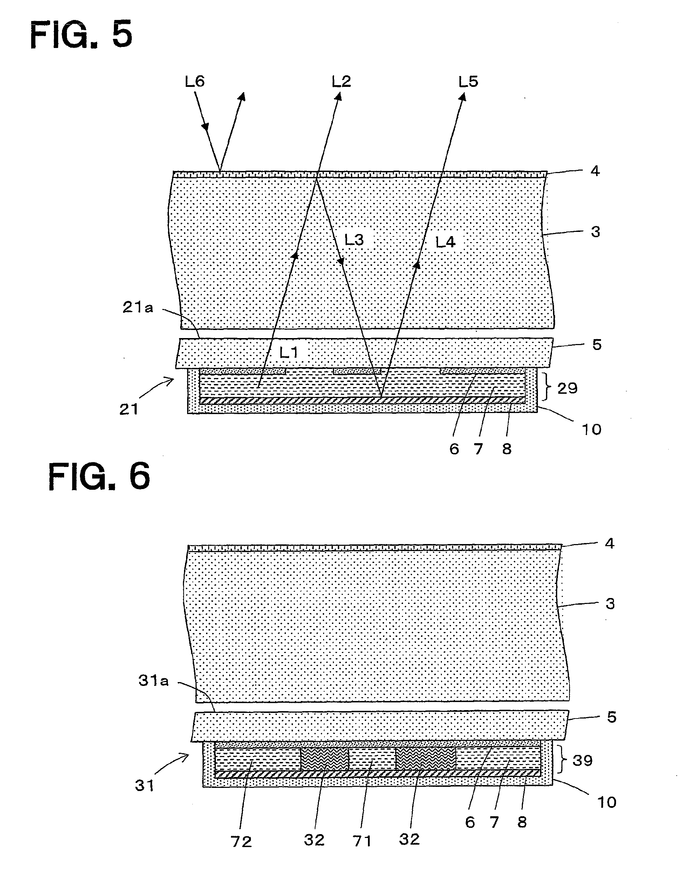

FIG. 5 shows a sectional view of a structure of a display device according to Embodiment 4. In this display device, in place of the surface light-emission apparatus 1 in the display device of Embodiment 1 shown in FIG. 2, a mirror type display 21 composed of an organic EL apparatus is employed. Further, the design film 2 is omitted while a transparent member 3 in which a half mirror layer 4 is formed is arranged on the front surface 21a side of the display 21.

Almost similarly to the surface light-emission apparatus 1 according to Embodiment 1, the display 21 has an organic EL device 29 formed by stacking a transparent electrode layer 6, an organic layer 7 containing a light emitting layer, and a reflection electrode layer 8 on the surface of a transparent substrate 5. Then, a protection layer 10 is formed so as to cover the entire organic EL device 29. However, the transparent electrode layer 6 is not formed over the entire organic EL device 29. Instead, the transparent electrode layer 6 is patterned in correspondence with a design to be displayed on this display device. Here, the organic layer 7 and the reflection electrode layer 8 are formed over the entire surface of the organic EL device 29.

Because the organic EL device 29 having this configuration is employed, when a current is supplied between the transparent electrode layer 6 and the reflection electrode layer 8 so that the organic EL device 29 is turned ON, only the region where the transparent electrode layer 6 is present causes light emission in the organic layer 7. Thus, light emission of the pattern is performed in correspondence with the pattern shape of the transparent electrode layer 6.

Also in Embodiment 4 of the present invention, similarly to Embodiment 1, the light L1 generated in the organic layer 7 of the region where the transparent electrode layer 6 is present enters directly the transparent electrode layer 6, or alternatively, after being reflected in the reflection electrode layer 8, enters the transparent electrode layer 6. Then, after being transmitted through the transparent substrate 5 and then emitted from the front surface 21a of the display 21, the light enters the transparent member 3, then is transmitted through the transparent member 3, and then enters the half mirror layer 4.

The light L1 branches into: light L2 that is transmitted through the half mirror layer 4 and then emitted; and light L3 that is reflected in the half mirror layer 4 and then transmitted through the transparent member 3 again. The light L2 having been transmitted through the half mirror layer 4 reaches, for example, the eyes of a passenger of the vehicle. As a result, an image of the design drawn as a pattern shape of the transparent electrode layer 6 is recognized by the passenger. On the other hand, the light L3 reflected in the half mirror layer 4 is, after being transmitted through the transparent member 3 again, transmitted sequentially through the transparent electrode layer 6 and the organic layer 7 of the display 21, and then reflected in the reflection electrode layer 8. Light L4 thus reflected in the reflection electrode layer 8 is transmitted sequentially through the organic layer 7, the transparent electrode layer 6, and the transparent substrate 5, and then emitted from the front surface 21a of the display 21. The light L4 is then transmitted through the transparent member 3, and then enters the half mirror layer 4 again.

A part of the light L4 is transmitted through the half mirror layer 4 and then emitted as light L5 to reach the eyes of the passenger of the vehicle similarly to the light L2. As a result, an image of the design drawn as a pattern shape of the transparent electrode layer 6 is recognized by the passenger.
At that time, the image formed by the light L5 is shifted in a horizontal direction, i. e., in a plane direction of the half mirror layer 4, relative to the image formed by the light L2. Thus, the design comes up and is seen in three dimensions.
Here, when the transparent member 3 has a greater thickness, the amount of shift between the two images increases so that the design is seen in a state of coming up further.

Further, when the organic EL device 29 is turned OFF, the light emission from the display 21 stops, so the display device serves as a simple mirror by virtue of the half mirror layer 4. Thus, the design drawn as a pattern shape of the transparent electrode layer 6 becomes invisible.

As described above, also in Embodiment 4 of the present invention, similarly to Embodiments 1 to 3, the display 11 serves as a mirror and hence has satisfactory appearance at the time of non-emission of light. Further, the design drawn as a pattern shape of the transparent electrode layer 6 comes up and is seen in three dimensions only at the time of light emission.
Further, the design film 2 employed in the display device of Embodiment 1 is omitted. This reduces the number of components, hence simplifies the manufacturing, thereby enabling manufacturing of the display device at low cost.

### Embodiment 5

FIG. 6 shows a sectional view of a structure of a display device according to Embodiment 5. Unlike the display device of Embodiment 4 shown in FIG. 5 that employs the display 21 having the organic EL device 29 in which the transparent electrode layer 6 is patterned, the display device of this embodiment employs a mirror type display 31 having an organic EL device 39 in which organic layers 7, 71, and 72 having the same emission color are patterned. A transparent member 3 in which a half mirror layer 4 is formed is arranged on the front surface 31a side of the display 31.

The organic EL device 39 is formed by stacking a transparent electrode layer 6, organic layers 7, 71, and 72 containing light emitting layers, and a reflection electrode layer 8 on the surface of a transparent substrate 5. The organic layers 7, 71, and 72, at least the light emitting layers when these organic layers have a multilayer structure containing a light emitting layer, are patterned in correspondence with a design to be displayed on this display device. Here, when the organic layers 7, 71, and 72 of single layer structure having only a light emitting layer are to be patterned, or alternatively when entirety of the thickness direction of the organic layers 7, 71, and 72 of multilayer structure containing a light emitting layer are to be patterned, in order to prevent a short circuit between the transparent electrode layer 6 and the reflection electrode layer 8, a transparent insulating layer 32 need to be formed in a part where the organic layers 7, 71, and 72 are removed. Here, the transparent electrode layer 6 and the reflection electrode layer 8 are formed over the entire surface of the organic EL device 39.

Because the organic EL device 39 having this configuration is employed, when a current is supplied between the transparent electrode layer 6 and the reflection electrode layer 8 so that the organic EL device 39 is turned ON, only the region where the light emitting layer is present emits light. Thus, also in Embodiment 5 of the present invention, similarly to Embodiment 4, when the organic EL device 39 is turned ON, the design drawn as a pattern shape of the light emitting layers comes up and is seen in three dimensions. When the organic EL device 39 is turned OFF, the display device serves as a simple mirror by virtue of the half mirror layer 4.
Here, the emission colors of the organic layers 7, 71, and 72 in Embodiment 5 are the same. However, the present invention is not limited thereto. For example, the organic layers 7, 71, and 72 individually may emit light in any one of two colors. Alternatively, the emission color of the organic layer 7 may be red, the emission color of the organic layer 71 may be green, and the emission color of the organic layer 72 may be blue.

### Embodiment 6

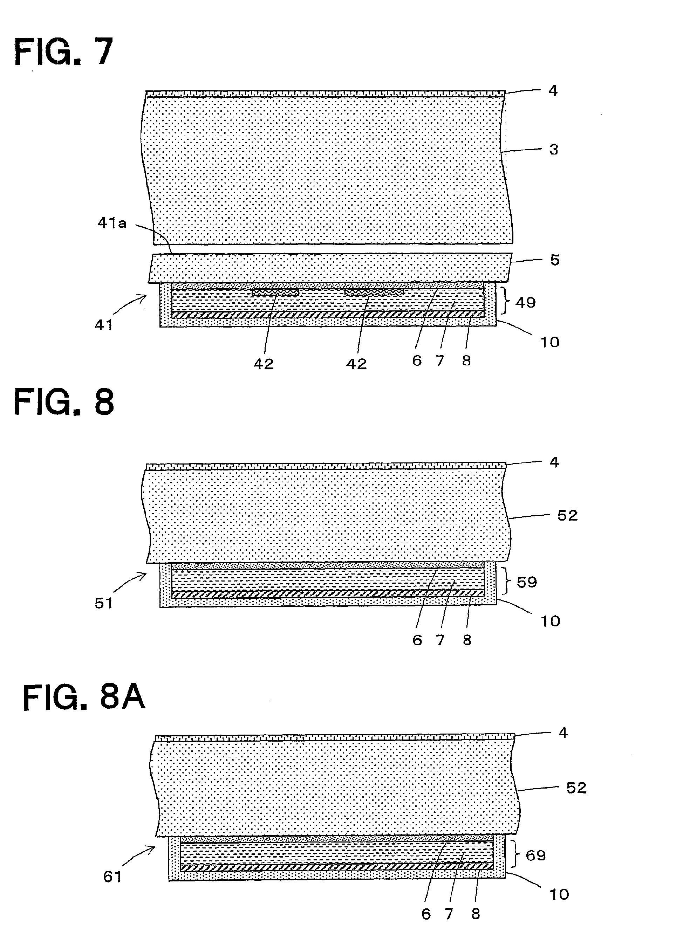

FIG. 7 shows a sectional view of a structure of a display device according to Embodiment 6. Unlike the display device of Embodiment 4 shown in FIG. 5 that employs the display 21 having the organic EL device 29 in which the transparent electrode layer 6 is patterned, the display device of this embodiment employs a mirror type display 41 having an organic EL device 49 provided with a patterned insulating layer 42. A transparent member 3 in which a half mirror layer 4 is formed is arranged on the front surface 41a side of the display 41.

The organic EL device 49 is formed by stacking a transparent electrode layer 6, an insulating layer 42, an organic layer 7 containing a light emitting layer, and a reflection electrode layer 8 on the surface of a transparent substrate 5. The insulating layer 42 is patterned in correspondence with a design to be displayed on this display device. The insulating layer 42 has transmissivity to visible light. Here, the transparent electrode layer 6, the organic layer 7, and the reflection electrode layer 8 are formed over the entire surface of the organic EL device 49.

Because the organic EL device 49 having this configuration is employed, when a current is supplied between the transparent electrode layer 6 and the reflection electrode layer 8 so that the organic EL device 49 is turned ON, the region where the insulating layer 42 is present does not emit light, and only the region where the insulating layer 42 is not present emits light. Thus, also in Embodiment 6 the present invention, similarly to Embodiments 4 and 5, when the organic EL device 49 is turned ON, a design drawn by reversing the pattern shape of the insulating layer 42 comes up and is seen in three dimensions. When the organic EL device 49 is turned OFF, the display device serves as a simple mirror by virtue of the half mirror layer 4.

Here, the insulating layer 42 has been formed between the transparent electrode layer 6 and the organic layer 7. However, it is sufficient that the insulating layer 42 is interposed between the transparent electrode layer 6 and the reflection electrode layer 8. Thus, the insulating layer 42 may be formed, for example, between the organic layer 7 and the reflection electrode layer 8.

### Embodiment 7

FIG. 8 shows a sectional view of a structure of a display device according to Embodiment 7. Unlike the display device of Embodiment 4 shown in FIG. 5 that employs the display 21 having the organic EL device 29 in which the transparent electrode layer 6 is patterned, the display device of this embodiment employs a mirror type display 51 having an organic EL device 59 in which a large number of pixels are formed in the shape of a matrix. A transparent member 3 in which a half mirror layer 4 is formed is arranged on the front surface 51a side of the display 51.

The organic EL device 59 has a large number of pixels each formed by stacking a transparent electrode layer 6, an organic layer 7 containing a light emitting layer, and a reflection electrode layer 8 on the surface of a transparent substrate 5. When these pixels are selected and caused to emit light, a desired pattern emits light so that dot matrix display can be performed.

Thus, similarly to Embodiments 4 to 6, when the organic EL device 59 is turned ON, the design drawn as a pattern of light emission comes up and is seen in three dimensions. When the organic EL device 59 is turned OFF, the display device serves as a simple mirror by virtue of the half mirror layer 4.
In particular, in Embodiment 7 of the present invention, the pattern of light emission of the organic EL device 59 can be changed arbitrarily by selection of the pixels. Thus, a plurality of designs can be displayed in turn in a time-series manner.

Here, the display 51 may be driven by a passive matrix method or an active matrix method.
Further, the display 51 may be a color display capable of displaying in plural colors or alternatively a monochrome display that displays in a particular color.

In Embodiment 7 of the present invention, a design to be displayed was displayed by dot matrix display. However, in place of the display 51, as shown in FIG. 8a, the design may also be displayed by segment display by employing a mirror type display 61 having an organic EL device 69 manufactured by a method, for example, in which the transparent electrode layer is formed in the form of a plurality of segments by division patterning and in which the organic layer containing a light emitting layer and the reflection electrode layer are formed over the entire surface.

In all the display devices of Embodiments 1 to 7 described above, when the organic EL device is turned ON, a design to be displayed comes up and is seen in three dimensions, while the display device serves as a simple mirror when the organic EL device is turned OFF. Thus, an effect is obtained that the depth is seen greater than the actual thickness of the display device and that the space where the display device is installed is seen larger. Thus, these display devices are more effective when the display device shown as an example of the audio cover C in Embodiment 1 is employed in a limited small space like in the cabin of a vehicle such as an automobile.

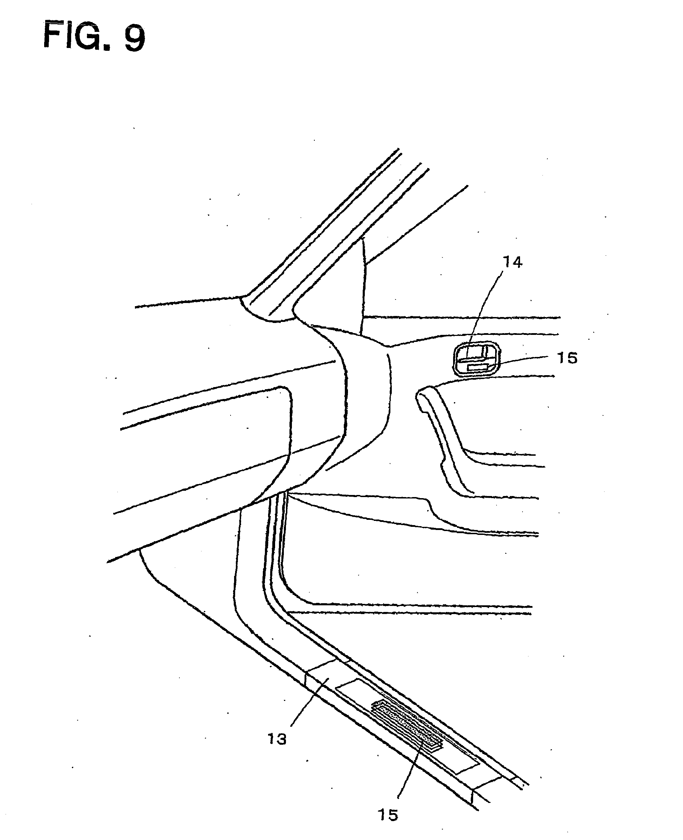

In addition to the use in the audio cover C shown as an example in Embodiment 1, a display device 15 of the present invention may be installed in a scuff plate 13, an inside door handle 14, and the like in the cabin of a vehicle as shown in FIG. 9.
When a display device 15 constructed according to any one of Embodiments 1 to 7 is employed in the scuff plate 13 such that characters indicating the car type or the company name is displayed, the characters come up and are seen in three dimensions. In particular, the scuff plate 13 is installed at a position seen obliquely downward from a passenger of the vehicle when the door is opened at the time of getting off the car. Thus, the characters are seen in three dimensions to a greater extent. Further, when the characters are displayed in multiple by using the display device of Embodiment 3, aesthetic appearance is improved so that the effect of the design improves.
Further, the emission color may be monochrome such as white, blue, and yellow. However, when a plurality of organic EL devices having mutually different emission colors are arranged and used, display can be performed in a state where the emission color is changed for every character. Further, when the voltage applied between the electrodes of the organic EL device is changed part by part, gradation also can be formed.
In addition to characters, a geometrical pattern or the like may be displayed on the display device 15. For example, when the display device of Embodiment 3 is used, a repeated pattern of a geometrical pattern is displayed.
Both of the display of characters and the display of a geometrical pattern may be used as lighting in a vehicle.
When the display device 15 of the present invention is to be installed into the scuff plate 13, it is preferable that the display device 15 be driven in synchronization with the opening and closing of the door such that the display device 15 lights up when the door is opened.

When the display device 15 of the present invention is installed in the inside door handle 14, a geometrical pattern or the like can be displayed in three dimensions when the display device 15 is turned ON. Because the inside door handle 14 is installed in general at a position seen obliquely downward from a passenger of a vehicle, the geometrical pattern or the like is seen in three dimensions to a greater extent. Further, when the display device of Embodiment 3 is employed, a geometrical pattern is displayed in multiple so that a repeated pattern can be obtained.
In addition to the display of a geometrical pattern, characters or the like may be displayed. In this case, a plurality of organic EL devices having mutually different emission colors may be used so that display may be performed in a state where the emission color is changed for every character. Further, when the voltage applied between the electrodes of the organic EL device is changed part by part, gradation also can be formed.
The inside door handle 14 is in general formed in the shape of a curved surface having a smooth surface. Then, the organic EL device can be formed in a remarkably reduced thickness. Thus, when the organic EL device is employed, the display device 15 of the present invention can easily be installed in accordance with the curved surface of the inside door handle 14.
The display device 15 serves as a mirror at the time of non-emission of light. Thus, the inside door handle 14 is not seen as a handle provided with a light source, and hence has satisfactory appearance.
Further, because the inside door handle 14 is operated during the stop of the vehicle, the display device 15 may be driven in synchronization with the operation of the shift lever so that the brightness of light emission is increased for the purpose of improving the visibility for a passenger during the stop of the vehicle. Further, during the driving of the vehicle, the brightness of light emission may be reduced, or alternatively the display device 15 may go into a non light-emitting state.

In addition to the use in the inside door handle 14 and the scuff plates 13, the display device according to the present invention may be installed in the following parts in the cabin of a vehicle.

### (1) Periphery of instrument panel

Combination meter, grab door, console lid, ashtray, steering wheel, rearviewmirror, cup holder, andsmallitemholderfordriver's seat

### (2) Periphery of door

Door trim, pillar garnish, armrest, door armrest, and door trim pocket

### (3) Periphery of seat

Seat track cover, seat back pocket, seat belt buckle, headrest, and seat under-tray

### (4) Periphery of deck

Deck side trim, back door trim, deck under-tray, tonneau cover, rear deck floor trim, and deck side box for wagon-type car

Luggage mat and package tray trim for sedan-type car

### (5) Others

Roof head lining, carpet, assist grip, overhead console, air purifier, air conditioner switch, and parking brake lever.

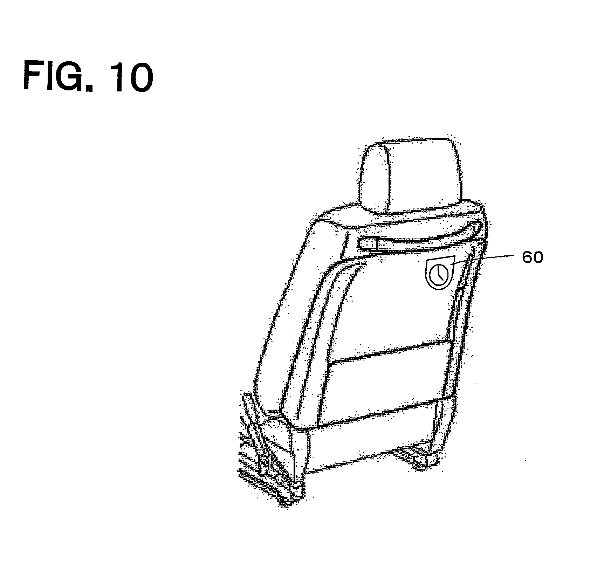

Further, in the display device of Embodiment 7, a plurality of designs can be displayed in turn in a time-series manner. Thus, as shown in FIG. 10, a clock 60 may be constructed and installed in the cabin of a vehicle.
Here, in each of the above-mentioned embodiments, the surface light-emission apparatus 1, or the displays 21, 31, 41, or 51, which includes a bottom emission type organic EL apparatus, has been employed. However, the present invention is not limited thereto. That is, a mirror type surface light-emission apparatus or a display, which includes, a top emission type organic EL apparatus, may also be employed. Further, the present invention is not limited to an organic EL apparatus. That is, a mirror type surface light-emission apparatus or a display, which includes an inorganic EL apparatus, may be employed.
Further, in each of the above-mentioned embodiments, the transparent member 3 may be an air layer. Alternatively, the transparent member 3 and the transparent substrate 5 may be integrated.

## Claims

1. A display device, comprising:
an image forming apparatus which has a reflecting layer on a rear surface side thereof and emits light to a front surface side thereof to form an image of a design to be displayed;
a transparent member arranged on the front surface side of the image forming apparatus; and
a half mirror layer arranged on a front surface side of the transparent member.

2. A display device according to claim 1, wherein:
the image forming apparatus has a surface light-emission apparatus and a design construction layer;
the surface light-emission apparatus is a mirror type light emission apparatus which has a reflecting layer on a rear surface side thereof and emits light from a front surface thereof; and
the design construction layer is a layer which is arranged on the front surface side of the surface light-emission apparatus and in which a design to be displayed is formed.

3. A display device according to claim 2, wherein the surface light-emission apparatus comprises an electroluminescence apparatus having: a reflection electrode layer which forms the reflecting layer; a transparent electrode layer; and a light emitting layer interposed between the reflection electrode layer and the transparent electrode layer.

4. A display device according to claim 2, wherein the design construction layer comprises a reflection film which is patterned in correspondence with a shape of a design to be displayed and has a light blocking property.

5. A display device according to claim 4, wherein the reflection film comprises a mirror-like masking sheet arranged on the front surface of the surface light-emission apparatus or on a rear surface of the transparent member.

6. A display device according to claim 2, wherein the design construction layer comprises a light transmitting film which is patterned in correspondence with a shape of a design to be displayed.

7. A display device according to claim 4, wherein the design construction layer comprises a thin film formed on the front surface of the surface light-emission apparatus or on a rear surface of the transparent member by at least one method selected from vapor deposition,plating,plating-appearance hotstamping,and printing.

8. A display device according to claim 1, wherein:
the image forming apparatus has a display; and
the display is a mirror type display which has a reflecting layer on a rear surface side thereof and emits light in a pattern corresponding to a design to be displayed.

9. A display device according to claim 8, wherein the display comprises an electroluminescence apparatus having: a reflection electrode layer which forms the reflecting layer; a transparent electrode layer; and a light emitting layer interposed between the reflection electrode layer and the transparent electrode layer.

10. A display device according to claim 9, wherein at least one of the transparent electrode layer and the light emitting layer of the electroluminescence apparatus is patterned in correspondence with the shape of a design to be displayed.

11. A display device according to claim 9, wherein the electroluminescence apparatus has an insulating layer which is interposed between the reflection electrode layer and the transparent electrode layer and is patterned in correspondence with the shape of a design to be displayed.

12. A display device according to claim 9, wherein the electroluminescence apparatus performs segment display of a design to be displayed.

13. A display device according to claim 9, wherein the electroluminescence apparatus performs dot matrix display of a design to be displayed.

14. A display device according to claim 9, wherein the electroluminescence apparatus emits light in a plurality of colors.

15. A display device according to claim 1, which is installed in a cabin of a vehicle.

16. A display device according to claim 15, which is installed in a scuff plate of a vehicle.

17. A display device according to claim 15, which is installed in an inside door handle of a vehicle.
